# EUROPEAN PATENT SPECIFICATION

(11) **EP 2 532 977 B1**
(45) Date of publication and mention of the grant of the patent: **27.01.2016**
(21) Application number: 11739975.8
(22) Date of filing: 28.01.2011
(51) Int. Cl.: F24D 3/12, E04F 15/00, E04F 15/18, F24D 3/14

(54) **HEATING STRUCTURE**
HEIZSTRUKTUR
STRUCTURE DE CHAUFFAGE

(30) Priority: 05.02.2010 KR 20100010722
(43) Date of publication of application: 12.12.2012
(73) Proprietor: Lee, Sang Won, Seoul 139-207 (KR)
(72) Inventor: Lee, Sang Won, Seoul 139-207 (KR)
(74) Representative: ABG Patentes, S.L.
(86) International application number: PCT/KR2011/000619
(87) International publication number: WO 2011/096679

(56) References cited:
- EP-A1- 0 592 159
- DE-A1- 3 203 728
- DE-U1- 8 400 402
- KR-A- 900 008 226
- KR-U- 19980 062 348
- KR-Y1- 200 241 008
- KR-Y1- 200 393 462

## Description

### [Technical Field]

The present invention relates to a heating structure, and more particularly, to a heating structure which is used for increasing an indoor temperature.

### [Background Art]

Generally, to heat the indoor space, radiators are mainly used in the west, and Korean floor heaters (hereinafter, referred to as "ondols") are mainly used in Korea. Ondols are heating systems for heating the indoor floor. In the old days, hot air passes through the floor to heat the stone floor. However, in recent years, hot water heated by a boiler passes through hot water pipes installed within the floor to heat the indoor space.

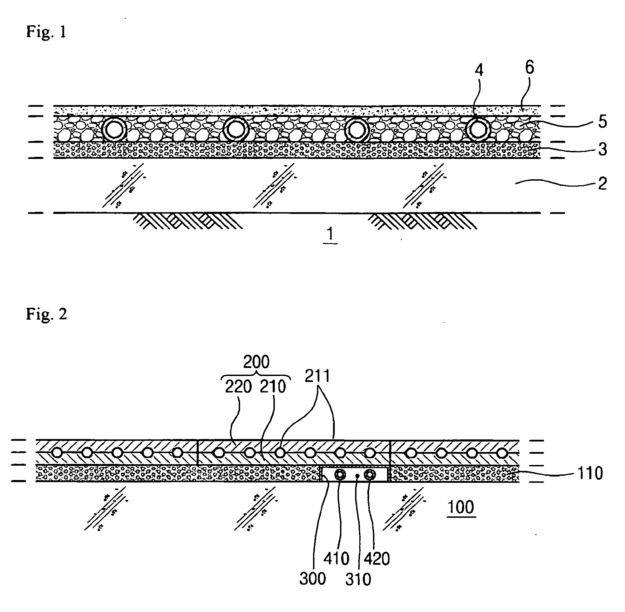

FIG. 1 is a cross-sectional view illustrating a structure of a floor in which hot water pipes are installed according to a related art.

According to the related art, foundational concrete 2 is cured after casting the foundational concrete 2 on a top surface of a floor 1. Then, an insulator 3 is installed on the foundational concrete 2, and hot water pipes 4 are arranged in a zigzag shape. Thereafter, gravel is filled between the hot water pipes 4 as a filler. Here, a frame (not shown) for fixing the hot water pipes 4 is installed together with the hot water pipes 4. Then, the resultant surface is finished using cement and cured.

As described above, to finish the floor construction in the heating structure according to the related art, twice cement casting and curing processes should be performed. Thus, relatively high construction costs and long construction time are required. Also, if water leakage occurs in the hot water pipes 4, the floor construction should be performed again after the whole hot water pipes are completely dismantled.

Also, since the heating structure according to the related art requires a plurality of layers, an overall load of the floor may be increased. Thus, in case of a multilayer structure, an internal force required for the whole pillar may be increased due to the increase of the floor load to increase the cost of construction.

Document EP0592159A1 discloses a heating system including a plurality of solid panels in the form of heating modules and incorporating a heat exchange element within the panel and in thermal contact with the material forming the panel.

### [Disclosure]

### [Technical Problem]

The present invention provides a heating structure which can be saved in construction cost and time and easily maintained and repaired.

### [Technical Solution]

In accordance with an exemplary embodiment, a heating structure includes: an insulator disposed on a top surface a structure; an ondol panel disposed on a top surface of the insulator, the ondol panel having a hot water passage including an inlet port and an outlet port; a pipe housing having a top surface to correspond to the top surface of the insulator, the pipe housing including a connection pipe receiving part therein; a hot water supply pipe having one end connected to the inlet port and the other end connected to a hot water supply part, the hot water supply pipe being received in the connection pipe receiving part; and a hot water discharge pipe having one end connected to the outlet port and the other end connected to a hot water discharge part, the hot water discharge pipe being received in the connection pipe receiving part.

The inlet port and the outlet port of the ondol panel may be disposed on a surface of the ondol panel facing the insulator.

The pipe housing may have the substantially same thickness as the insulator. The pipe housing may have a connection hole in a surface thereof facing the inlet port and the outlet port and may further include: an inlet port connection port having one end connected to the inlet port and the other end connected to the hot water supply pipe; and an outlet port connection port having one end connected to the outlet port and the other end connected to the hot water discharge pipe.

The insulator may include compression styrofoam.

One of a coupling groove and a coupling protrusion may be disposed on a side surface of the ondol panel to couple the ondol panel to an adjacent ondol panel having the other one of the coupling groove and the coupling protrusion.

### [Advantageous Effects]

According to the embodiments of the present invention, the following effects are expected. However, that the embodiments are included within the technical range of the present invention only if all the following effects are exerted are not essential.

First, it may be unnecessary to wait until the casted cement is cured. Therefore, the construction period may be significantly reduced, and also, the construction costs may be reduced. Also, if water leakage occurs in one of the ondol panels, only the leaking ondol panel may be replaced to easily maintain and repair the heating structure.

Also, since the hot water supply pipe for supplying hot water into the ondol panel and the hot water discharge pipe for discharging the hot water are installed within the pipe housing, the flatness may be maintained without performing the cement construction under the ondol panel.

Also, the heating structure may be reduced in load to reduce the overall construction costs for building.

### [Description of Drawings]

FIG. 1 is a cross-sectional view of a heating structure according to a related art.
FIG. 2 is a cross-sectional view of a heating structure according to a first embodiment of the present invention.
FIG. 3 is an exploded perspective view of the heating structure of FIG. 2.
FIG. 4 is a perspective view of a pipe housing of FIG. 2.
FIG. 5 is a cross-sectional view illustrating a modified example of an ondol panel of FIG. 2.
FIG. 6 is an exploded perspective view of a heating structure according to a second embodiment (not claimed) of the present invention.

### [Mode for Invention]

Exemplary embodiments of the present invention will be described below in more detail with reference to the accompanying drawings.

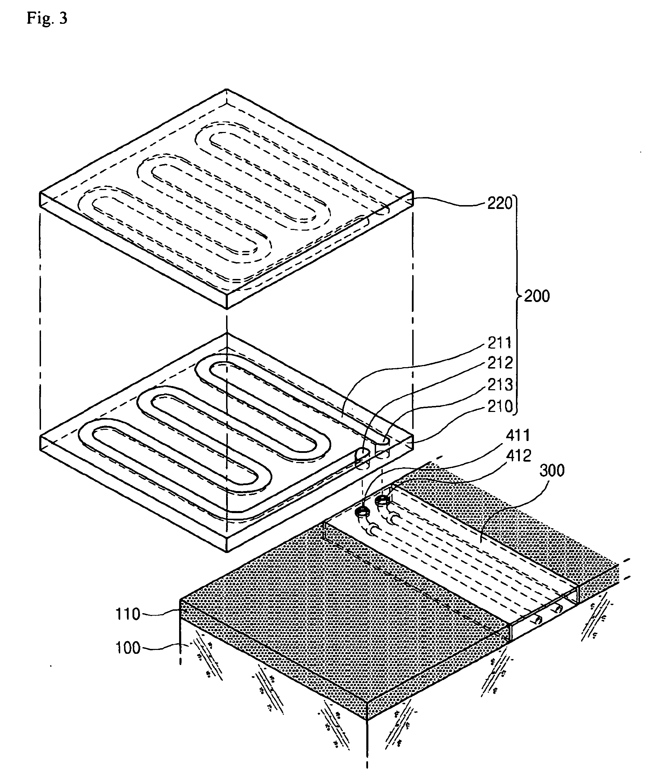

FIG. 2 is a cross-sectional view of a heating structure according to a first embodiment of the present invention. FIG. 3 is an exploded perspective view of the heating structure of FIG. 2.

The heating structure according to the first embodiment of the present invention includes an insulator 110 disposed on a top surface of a structure 100, an ondol panel 200 disposed on a top surface of the insulator 110 and having a hot water passage 211 including an inlet port 212 and an outlet port 213, a pipe housing 300 having a top surface to correspond to the top surface of the insulator 110 and including a connection pipe receiving part 310 therein, a hot water supply pipe 410 having one end connected to the inlet port 212 and the other end connected to a hot water supply part (not shown) and received in the connection pipe receiving part 310, and a hot water discharge pipe 420 having one end connected to the outlet port 213 and the other end connected to a hot water discharge part (not shown) and received in the connection pipe receiving part 310.

The structure 100 represents called a foundation constituting a floor of a room structure. However, the present invention is not limited thereto. For example, the structure 100 may include a foundational wall in a case where the ondol structure is installed in the wall. Hereinafter, for convenience of description, the floor of the room structure will be described as an example of the structure 100.

The insulator 110 is configured to prevent heat released from the hot water passage 211 from being conducted into the structure 100. Also, compression styrofoam may be used as the insulator 110. The compression styrofoam is a term commonly used in markets. An accurate term of the compression styrofoam is called an extruded foam polystyrene board. Here, the compression styrofoam may be relatively stronger than general styrofoam.

The ondol panel 200 has the hot water passage 211 therein as shown in FIG. 3. As shown in FIG. 3, an upper plate 220 and a lower plate 210 are separately manufactured, and then a passage is formed in each of surfaces of the upper and lower plates 220 and 210 to be coupled to each other. Thereafter, the upper and lower plates 220 and 210 are bonded to each other to form the hot water passage 211. The inlet port 212 and the outlet port 213 pass through a bottom surface of the lower plate 210 (i.e., a surface facing the insulator). However, the present invention is not limited thereto. For example, the inlet port 212 and the outlet port 213 may laterally pass to communicate with an adjacent ondol panel 200. If the inlet port 212 and the outlet port 213 pass through the bottom surface, the ondol panel 200 may be easily assembled with the pipe housing 300.

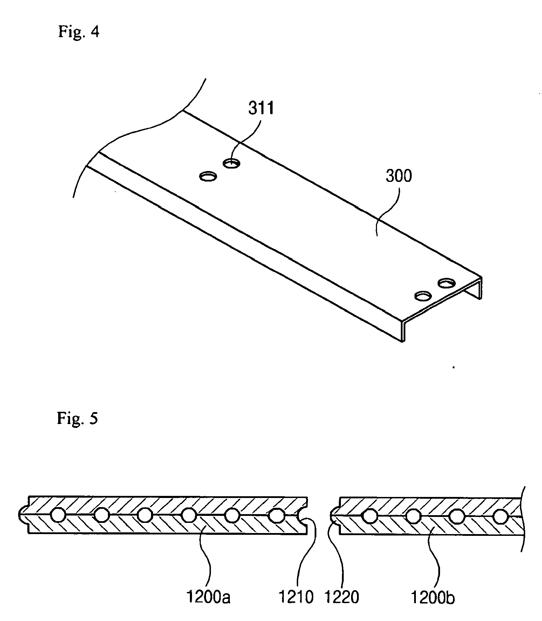

Also, as shown in FIG. 5, a coupling groove 1210 and a protrusion 1220 which are provided for coupling one of ondol panels 1200a and 1200b to the other ondol panel may be disposed on both side surfaces of the ondol panels 1200a and 1200b, respectively.

FIG. 4 is a perspective view of the pipe housing of FIG. 2.

The pipe housing 300 may have the substantially same thickness as the insulator 110. The substantially same thickness may mean that thicknesses may be slightly different from each other. That is, when the ondol panel is constructed, the pipe housing 300 may have a thickness enough to prevent the insulator 110 from being shaken due to a thickness difference between the pipe housing 300 and the insulator 110.

The pipe housing 300 may be manufactured by bending a metal plate. Alternatively, a plastic material having strong hardness may be injection-molded to manufacture the pipe housing 300. Connection holes 311 are defined to pass through a surface of the pipe housing 300 facing the inlet port 212 and the outlet port 213. The number of connection holes 311 may be varied according to the number of ondol panels 200 for supplying hot water.

The hot water supply part (not shown) is commonly called a device for supplying hot water. For example, the hot water supply part may represent a boiler or a hot water tank attached to the boiler. The hot water discharge part may represent a portion through which water within the boiler is recovered.

The heating structure may further include an inlet port connection port 411 having one end connected to the inlet port 212 and the other end connected to the hot water supply pipe to easily connect the inlet port 212 to the hot water supply pipe, and an outlet port connection port 412 having one end connected to the outlet port 213 and the other end connected to the hot water discharge pipe to easily connect the outlet port to the hot water discharge pipe.

The inlet port connection port 411 and the outlet port connection port 412 protrude to the outside of the pipe housing 300 through the connection holes 311, respectively. That is, a portion of the inlet port connection port 411 connected to the inlet port 212 and a portion connected to the hot water supply pipe 410 are bent, and then the portion of the inlet port connection port 411 connected to the inlet port 212 protrudes upward. Also, a portion of the outlet port connection port 412 connected to the outlet port 213 and a portion connected to the hot water discharge pipe 420 are bent, and then the portion of the outlet port connection port 412 connected to the outlet port 213 protrudes upward. As described above, since the portions of the inlet port connection port 411 and the outlet port connection port 412 connected to the ondol panel 200 protrude upward, the ondol panel 200 is inserted downward from an upper side to connect the pipes to each other, thereby completing the construction.

As described above, the insulator 110 and the pipe housing 300 together with the hot water supply pipe and the hot water discharge pipe are disposed on the top surface of the structure, and then the ondol panel 200 is disposed on the insulator 110 to complete the construction of the heating structure.

Thus, it may be unnecessary to wait until the casted cement is cured like the related art. Therefore, the construction period may be significantly reduced, and also, the construction costs may be reduced. Also, if water leakage occurs in one of the ondol panels, only the leaking ondol panel may be replaced to easily maintain and repair the heating structure.

Also, since the hot water supply pipe for supplying hot water into the ondol panel and the hot water discharge pipe for discharging the hot water are installed within the pipe housing, flatness may be maintained without performing the cement construction under the ondol panel.

Also, the heating structure may be significantly reduced in load when compared to that of a heating structure according to the related art. Thus, the overall construction costs for building may be reduced.

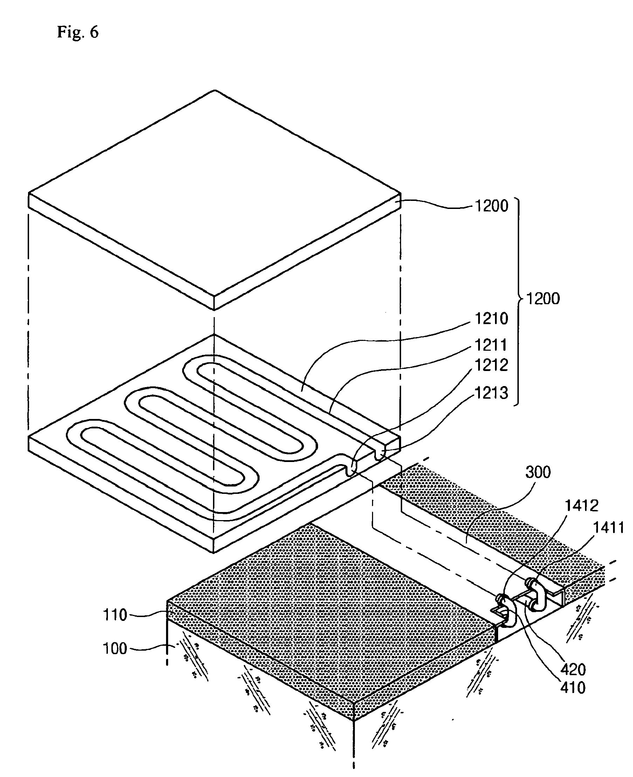

FIG. 6 is an exploded perspective view of a heating structure according to a second embodiment (not claimed) of the present invention.

The heating structure according to the second embodiment has the same shape as that according to the first embodiment, except for a shape of an ondol panel 1200 and shapes of an inlet port connection port 1412 and an outlet port connection port 1411.

A passage 1211 is defined in the ondol panel 1200 according to the second embodiment. An upper plate 1220 and a lower plate 1210 may be separately manufactured, and then a passage may be formed in a top surface of the lower plate 1210. Thereafter, the upper plate 1220 and the lower plate 1210 may be bonded to each other to form the passage 1211. Also, a pipe may be installed within the passage 1211 to fundamentally prevent water from leaking. An inlet port 1212 and an outlet port 1213 are disposed to laterally pass.

The inlet port connection port 1412 may be formed of a flexible and soft material such as a silicone. Also, the inlet port connection port 1412 has one end inserted into the inlet port 1212 and the other end connected to a hot water supply pipe 410. The outlet port connection port 1411 may be formed of a flexible and soft material such as a silicone. Also, the outlet port connection port 1411 has one end inserted into the outlet port 1213 and the other end connected to a hot water discharge pipe 420.

As described above, since the inlet port connection port 1412 and the outlet port connection port 1411, which are formed of the soft material, and an ondol panel, in which the inlet port and the discharge port are laterally disposed, are provided, the ondol panels may be easily coupled to each other even though position errors occur when the ondol panels are installed.

### [Explanation of Symbols]

| | | | |
|---|---|---|---|
| 100: | Structure | 110: | Insulator |
| 211: | Hot water passage | 212: | Inlet port |
| 213: | Outlet port | 200: | Ondol panel |
| 310: | Connection pipe receiving part | 300: | Pipe housing |
| 410: | Hot water supply pipe | 420: | Hot water discharge pipe |
| 411: | Inlet port connection port | 412: | Outlet port connection port |
| 1210: | Coupling groove | 1220: | Coupling protrusion |

## Claims

1. A heating structure comprising:
an insulator (110) disposed on a top surface of a structure (100);
an ondol panel (200) disposed on a top surface of the insulator (110), the ondol panel having a hot water passage (211) comprising an inlet port (212) and an outlet port (213);
a pipe housing (300) having a top surface to correspond to the top surface of the insulator (110), the pipe housing (300) comprising a connection pipe receiving part (310) therein;
a hot water supply pipe (410) having one end connected to the inlet port (212) and the other end connected to a hot water supply part, the hot water supply pipe (410) being received in the connection pipe receiving part (310); and
a hot water discharge pipe (420) having one end connected to the outlet port (213) and the other end connected to a hot water discharge part, the hot water discharge pipe being received in the connection pipe receiving part (310),
wherein the ondol panel (200) includes an upper plate (220) and a lower plate (210) separately manufactured, a passage being formed in each of surfaces of the upper (220) and lower (210) plates to be coupled to each other, **characterized in that** the upper (220) and lower (210) plates being bonded to each other to form the hot water passage (211) directly contacting to the hot water flowing in the hot water passage.

2. The heating structure of claim 1, wherein the inlet port (212) and the outlet port (213) of the ondol panel (200) are disposed on a surface of the ondol panel facing the insulator (110).

3. The heating structure of claim 1, wherein the pipe housing (300) has the substantially same thickness as the insulator (110).

4. The heating structure of claim 2, wherein the pipe housing (300) has a connection hole in a surface thereof facing the inlet port (212) and the outlet port (213) and further comprises:
an inlet port connection port (411) having one end connected to the inlet port (212) and the other end connected to the hot water supply pipe; and
an outlet port connection port (412) having one end connected to the outlet port (213) and the other end connected to the hot water discharge pipe.

5. The heating structure of any one of claims 1 to 4, wherein the insulator (110) comprises compression styrofoam.

6. The heating structure of any one of claims 1 to 4, wherein one of a coupling groove (1210) and a coupling protrusion (1220) is disposed on a side surface of the ondol panel to couple the ondol panel to an adjacent ondol panel having the other one of the coupling groove (1210) and the coupling protrusion (1220).

## Patentansprüche

1. Eine Heizungsstruktur enthaltend:
eine Isolierung (110) angeordnet auf einer oberen Fläche einer Struktur (100);
eine Ondol-Platte (200) angeordnet auf einer oberen Fläche der Isolierung (110), wobei die Ondol-Platte einen Warmwasserkanal (211) aufweist, der eine Einlassöffnung (212) und eine Auslassöffnung (213) enthält;
ein Leitungsgehäuse (300) mit einer oberen Fläche, um der oberen Fläche der Isolierung (110) zu entsprechen, wobei das Leitungsgehäuse (300) ein Aufnahmeelement (310) für ein Verbindungsrohr aufweist;
eine Warmwasserversorgungsleitung (410), dessen eines Ende an die Einlassöffnung (212) und das andere Ende an ein Warmwasserversorgungsteil angeschlossen ist, wobei die Warmwasserversorgungsleitung (410) von dem Aufnahmeelement (310) des Verbindungsrohrs aufgenommen wird; und
eine Warmwasserabführleitung (420), dessen eines Ende an die Auslassöffnung (213) und das andere Ende an ein Warmwasserabführteil angeschlossen ist, wobei die Warmwasserabführleitung von dem Aufnahmeelement (310) des Verbindungsrohrs aufgenommen wird;
wobei die Ondol-Platte (200) eine obere Platte (220) und eine untere Platte (210), die getrennt voneinander hergestellt werden, einschließt, wobei ein Kanal in jede der Oberflächen der oberen (220) und der unteren (210) Platte, die miteinander verbunden werden, ausgebildet ist, **dadurch gekennzeichnet, dass** die obere (220) und die untere (210) Platte miteinander verbunden sind, um den Warmwasserkanal (211) zu bilden, der direkt in Verbindung zum Warmwasser steht, das in dem Warmwasserkanal fließt.

2. Die Heizungsstruktur gemäß Anspruch 1, wobei die Einlassöffnung (212) und die Auslassöffnung (213) der Ondol-Platte (200) auf einer Oberfläche der Ondol-Platte angeordnet sind, die der Isolierung (110) zugewandt ist.

3. Die Heizungsstruktur gemäß Anspruch 1, wobei das Leitungsgehäuse (300) im Wesentlichen die gleiche Stärke wie die Isolierung (110) aufweist.

4. Die Heizungsstruktur gemäß Anspruch 2, wobei das Leitungsgehäuse (300) ein Verbindungsloch in einer Oberfläche davon aufweist, die der Einlassöffnung (212) und der Auslassöffnung (213) zugewandt ist und weiterhin enthält:
eine Verbindungsöffnung (411) für die Einlassöffnung, deren eines Ende mit der Einlassöffnung (212) verbunden ist und das andere Ende mit der Warmwasserversorgungsleitung verbunden ist; und
eine Verbindungsöffnung (412) für die Auslassöffnung, deren eines Ende mit der Auslassöffnung (213) verbunden ist und das andere Ende mit der Warmwasserabführleitung verbunden ist.

5. Die Heizungsstruktur gemäß irgendeinem der Ansprüche 1 bis 4, wobei die Isolierung (110) komprimiertes Styropor enthält.

6. Die Heizungsstruktur gemäß irgendeinem der Ansprüche 1 bis 4, wobei eine der beiden Elemente Verbindungsnut (1210) und Verbindungsfeder (1220) auf einer Seitenfläche der Ondol-Platte angeordnet ist, um die Ondol-Platte mit einer angrenzenden Ondol-Platte zu verbinden, die das jeweils andere Element Verbindungsnut (1210) und Verbindungsfeder (1220) aufweist.

## Revendications

1. Structure de chauffage comprenant :
un isolateur (110) disposé sur une surface supérieure d'une structure (100) ;
un panneau ondol (200) disposé sur une surface supérieure de l'isolateur (110), le panneau ondol ayant un passage d'eau chaude (211) comprenant un orifice d'entrée (212) et un orifice de sortie (213) ;
un boîtier de tuyau (300) ayant une surface supérieure pour correspondre à la surface supérieure de l'isolateur (110), le boîtier de tuyau (300) comprenant une partie de réception de tuyau de raccordement (310);
un tuyau d'alimentation en eau chaude (410) ayant une extrémité raccordée à l'orifice d'entrée (212) et l'autre extrémité raccordée à une partie d'alimentation en eau chaude, le tuyau d'alimentation en eau chaude (410) étant reçu dans la partie de réception de tuyau de raccordement (310) ; et
un tuyau de décharge d'eau chaude (420) ayant une extrémité raccordée à l'orifice de sortie (213) et l'autre extrémité raccordée à une partie de décharge d'eau chaude, le tuyau de décharge d'eau chaude étant reçu dans la partie de réception de tuyau de raccordement (310),
dans laquelle le panneau ondol (200) comprend une plaque supérieure (220) et une plaque inférieure (210) fabriquées séparément, un passage étant formé dans chacune des surfaces des plaques supérieure (220) et inférieure (210) pour être couplées entre elles, **caractérisée en ce que** les plaques supérieure (220) et inférieure (210) sont reliées entre elles afin de former le passage d'eau chaude (211) directement en contact avec l'eau chaude s'écoulant dans le passage d'eau chaude.

2. Structure de chauffage selon la revendication 1, dans laquelle l'orifice d'entrée (212) et l'orifice de sortie (213) du panneau ondol (200) sont disposés sur une surface du panneau ondol faisant face à l'isolateur (110).

3. Structure de chauffage selon la revendication 1, dans laquelle le boîtier de tuyau (300) a sensiblement la même épaisseur que l'isolateur (110).

4. Structure de chauffage selon la revendication 2, dans laquelle le boîtier de tuyau (300) a un trou de raccordement dans sa surface faisant face à l'orifice d'entrée (212) et à l'orifice de sortie (213) et comprend en outre :
un orifice de raccordement d'orifice d'entrée (411) ayant une extrémité raccordée à l'orifice d'entrée (212) et l'autre extrémité raccordée au tuyau d'alimentation en eau chaude ; et
un orifice de raccordement d'orifice de sortie (412) ayant une extrémité raccordée à l'orifice de sortie (213) et l'autre extrémité raccordée au tuyau de décharge d'eau chaude.

5. Structure de chauffage selon l'une quelconque des revendications 1 à 4, dans laquelle l'isolateur (110) comprend de la mousse de polystyrène de compression.

6. Structure de chauffage selon l'une quelconque des revendications 1 à 4, dans laquelle l'une parmi une rainure de couplage (1210) et une saillie de couplage (1220) est disposée sur une surface latérale du panneau ondol pour coupler le panneau ondol à un panneau ondol adjacent ayant l'autre parmi la rainure de couplage (1210) et la saillie de couplage (1220).
